(19) Europäisches Patentamt
European Patent Office
Office européen des brevets

(11) **EP 0 864 915 A1**

(12) **DEMANDE DE BREVET EUROPEEN**

(43) Date de publication:
**16.09.1998 Bulletin 1998/38**

(51) Int Cl.⁶: **G02F 1/39**

(21) Numéro de dépôt: **98400476.2**

(22) Date de dépôt: **27.02.1998**

| | |
|---|---|
| (84) Etats contractants désignés:<br>**AT BE CH DE DK ES FI FR GB GR IE IT LI LU MC NL PT SE**<br>Etats d'extension désignés:<br>**AL LT LV MK RO SI** | (72) Inventeurs:<br>• **Debuisschert, Thierry**<br>**94117 Arcueil Cedex (FR)**<br>• **Raffy, Jean**<br>**94117 Arcueil Cedex (FR)**<br>• **Pocholle, Jean-Paul**<br>**94117 Arcueil Cedex (FR)** |
| (30) Priorité: **28.02.1997 FR 9702440** | |
| (71) Demandeur: **THOMSON-CSF**<br>**75008 Paris (FR)** | |

(54) **Source laser accordable à haut rendement et haute énergie**

(57) L'invention concerne une source laser accordable comprenant un oscillateur paramétrique optique alimenté par un doubleur de fréquence. Le doubleur de fréquence génère une fréquence $2\omega$ à partir d'un laser de pompe émettant à la fréquence $\omega$, l'oscillateur paramétrique délivrant des fréquences signal et complémentaires $\omega_s$, et $\omega_i$ dont l'une au moins est sensiblement égale à la fréquence $\omega$. Avantageusement, le laser de pompe est un laser $CO_2$, permettant de générer des fréquences $\omega_s$ et $\omega_i$ dans la bande 8-12 μm.

Cette source laser accordable permet d'obtenir un rapport quantique entre les photons issus du laser de pompe et les photons produits par l'oscillateur paramétrique optique proche de 1.

Application : Spectroscopie appliquée à la détection de gaz, séparation isotopique.

FIG.1

## Description

Le domaine de l'invention est celui des sources laser accordables utilisant des oscillateurs paramétriques optiques, et notamment des sources laser accordables à haut rendement dans la bande de longueurs d'ondes 8-12 µm, bande spectrale visée dans des applications telles que le LIDAR, la spectroscopie appliquée à la détection de gaz ou bien encore la séparation isotopique utilisant des raies laser vers 16 µm.

De manière générale, ces sources laser accordables utilisent un oscillateur paramétrique optique (OPO) constitué d'un cristal non linéaire inséré dans une cavité optique. L'oscillateur paramétrique est pompé par un faisceau laser de fréquence $\omega_o$ couplé dans la cavité et il produit deux ondes optiques appelées onde signal et onde complémentaire, de fréquences accordables continûment $\omega_1$ et $\omega_2$, ces fréquences vérifiant la relation suivante :

$$\omega_1 + \omega_2 = \omega_o \qquad (1)$$

sous réserve que les conditions d'accord de phase sont satisfaites (conservation des vecteurs d'onde durant l'interaction). Les conditions d'accord de phase peuvent notamment être obtenues par biréfringence et rotation du cristal non linéaire. On obtient ainsi une source laser accordable en partant d'un laser à fréquence fixe.

Typiquement, à l'heure actuelle, on utilise des cristaux de type Nd:YAG pompé par une onde de pompe à 1,064 µm.

Lorsque l'on cherche à atteindre des gammes de longueurs d'onde de l'ordre de 8-12 µm, on se heurte au problème de rendement énergétique ou rapport quantique entre les photons issus de l'onde de pompe et les photons de l'onde signal et/ou de l'onde complémentaire. Ce rendement énergétique idéal est ainsi limité à 10 % par le rapport des longueurs d'onde dans le cas d'une onde de pompe à 1,064 µm pour une onde signal à 10 µm.

Pour résoudre ce problème, l'invention propose une source laser accordable utilisant un laser de pompe à une fréquence $\omega$, un doubleur de fréquence délivrant une onde à une fréquence $2\omega$ pour alimenter l'oscillateur paramétrique optique de manière à créer une onde signal et une onde complémentaire vérifiant la relation :

$$2\omega = \omega_s + \omega_i \qquad (2)$$

Les fréquences $\omega_s$ et $\omega_i$ sont accordables autour de la fréquence dégénérée $\omega = \omega_s = \omega_i$. Le rapport quantique entre les photons issus du laser de pompe et les photons produits par l'oscillateur paramétrique optique est proche de 1. L'énergie des photons issus du laser de pompe et qui sont convertis est donc très bien transféré aux faisceaux produits par l'oscillateur paramétrique optique.

Plus précisément, l'invention a pour objet une source laser accordable comprenant une cavité résonante comportant un matériau ayant un fort coefficient non linéaire d'ordre 2, et des moyens pour illuminer la cavité résonante par une onde de pompe de manière à générer une onde signal à une fréquence $\omega_s$ et une onde complémentaire à une fréquence $\omega_i$, caractérisée en ce que les moyens pour illuminer la cavité résonante comprennent une source optique émettant une onde optique à une fréquence $\omega$, un doubleur de fréquence alimenté par l'onde à la fréquence $\omega$ et générant une onde optique à une fréquence $2\omega$ correspondant à l'onde de pompe, la fréquence $\omega$ étant sensiblement égale aux fréquences $\omega_s$ et/ou $\omega_i$.

Avantageusement, les moyens pour illuminer la cavité résonante comprennent un laser $CO_2$ particulièrement adapté pour obtenir une source accordable dans la bande de longueurs d'onde 8-12 µm.

Le doubleur de fréquence peut de manière préférentielle être un cristal non linéaire de type $AgGaSe_2$ ou $ZnGeP_2$ ou $CdSe$ ou $GaSe$ ou autre, dans lequel la condition d'accord de phase est obtenue par rotation du cristal.

Le doubleur de fréquence peut également comprendre un matériau de type GaAs dans lequel les conditions de quasi accord de phase sont remplies.

La source laser accordable selon l'invention utilise un doubleur de fréquence et un oscillateur paramétrique optique dans lequel l'effet paramétrique est l'inverse du doublement de fréquence. La source laser selon l'invention peut donc avantageusement utiliser les mêmes matériaux au niveau du doubleur de fréquence et de l'oscillateur paramétrique optique puisque les gammes de longueurs d'onde mises en jeu sont les mêmes.

L'invention sera mieux comprise et d'autres avantages apparaîtront à la lecture de la description qui va suivre donnée à titre non limitatif et grâce aux figures annexées parmi lesquelles :

- la figure 1 schématise la source laser accordable selon l'invention ;
- la figure 2 illustre les courbes d'accord de phase représentatives des longueurs d'onde créées $\lambda_i$ et $\lambda_s$ en fonction de l'orientation d'un cristal non linéaire de $AgGaSe_2$ dans une cavité résonante et ce pour des longueurs d'onde de pompe $\lambda$ de 4,8 µm, 4,9 µm et 5,3 µm. L'angle intérieur représente l'angle entre la direction de propagation de l'onde optique dans le cristal non linéaire et l'axe optique du cristal non linéaire.

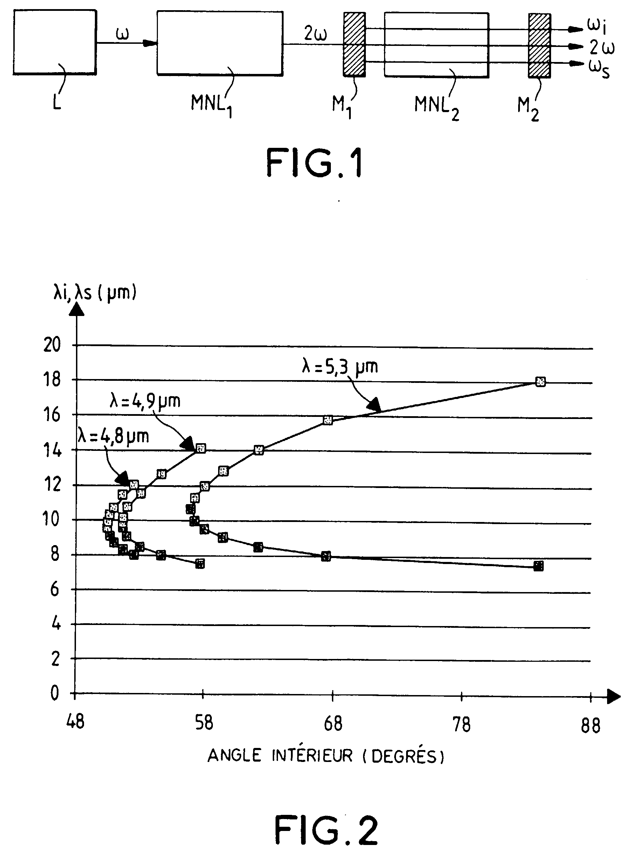

De manière générale, la source laser accordable selon l'invention, comprend comme le schématise la figure 1, un laser de pompe L, délivrant une onde lumineuse à la fréquence $\omega$, l'onde lumineuse pouvant comporter éventuellement d'autres fréquences secondaires.

Ce laser de pompe L illumine un premier matériau non linéaire $MNL_1$, capable de générer une fréquence double $2\omega$ à partir d'une onde incidente à la fréquence $\omega$ ; pour cela la condition d'accord de phase est satisfaite dans ce milieu non linéaire, à savoir :

$$K(2\omega) = 2K(\omega)$$

avec $K(\omega)$ et $K(2\omega)$ les vecteurs d'ondes des ondes optiques aux fréquences $\omega$ et $2\omega$.

Typiquement, la condition d'accord de phase peut être satisfaite en ajustant l'adaptation de phase entre les champs optiques aux fréquences $\omega$ et $2\omega$ par orientation d'un cristal non linéaire, en jouant sur la biréfringence de ce dernier, pour obtenir l'équation suivante :

$$n_{2\omega}(\theta).2\omega = 2n_{\omega}(\theta).\omega$$

$n_{2\omega}$ étant l'indice optique du cristal à la fréquence $2\omega$ pour un angle $\theta$ représentant l'angle de propagation de l'onde de pompe par rapport à l'axe optique du cristal.

$n_{\omega}$ étant l'indice optique du cristal à la fréquence $\omega$ pour ce même angle $\theta$.

Typiquement lorsque le laser de pompe est un laser $CO_2$ émettant sur des raies discrètes entre 9,6 μm et 10,6 μm, le cristal non linéaire peut être un cristal de $AgGaSe_2$ ou de $ZnGeP_2$ ou de CdSe ou de GaSe. Pour chacun de ces cristaux et compte tenu de la longueur d'onde de pompe, il est possible de satisfaire à la condition d'accord de phase par biréfringence pour créer une onde optique à la fréquence double, en adaptant l'orientation du cristal choisi.

La condition d'accord de phase pour créer une onde optique à la fréquence double peut également être satisfaite en utilisant des milieux semiconducteurs tels que AsGa dans lesquels on peut réaliser des conditions d'accord de phase artificiel ou «quasi accord de phase». Pour cela on réalise un réseau dans le milieu en jouant sur les propriétés linéaires (variation périodique de l'indice de réfraction) ou en jouant sur les propriétés non linéaires (variation périodique de la susceptibilité non linéaire d'ordre 2) pour maximiser l'efficacité. Dans ce cas, le réseau induit une dispersion supplémentaire permettant d'obtenir l'équation :

$$\Delta K = 2m\pi/\Lambda = K(2\omega) - 2K/\omega$$

(dans le cas où les vecteurs d'ondes sont parallèles) avec

$\Lambda$ pas du réseau
m nombre entier

et permettant de compenser le désaccord de phase existant $\Delta K$.

En sortie du milieu non linéaire $MNL_1$, l'onde optique créée à la fréquence $2\omega$, alimente l'oscillateur paramétrique optique constitué de deux miroirs $M_1$ et $M_2$ et d'un second milieu non linéaire $MNL_2$. Les miroirs $M_1$ et $M_2$ sont partiellement réfléchissants. Il s'agit de préférence de miroirs multidiélectriques capables de réfléchir sélectivement différentes longueurs d'onde. Le faisceau laser à la fréquence $2\omega$, couplé à la cavité produit deux faisceaux optiques signal et complémentaire aux fréquences $\omega_s$ et $\omega_i$ qui peuvent continûment varier en réglant de manière adéquate la direction de propagation desdits faisceaux dans le milieu non linéaire $MNL_2$.

Avantageusement, la source laser selon l'invention peut comprendre un filtre pour la fréquence $\omega$, en sortie du milieu non linéaire $MNL_1$. En effet, un tel filtre permet d'éviter les problèmes de tenue au flux des miroirs et du milieu non linéaire $MNL_2$, que peut entraîner l'énergie incidente inutile à la fréquence $\omega$.

Typiquement, l'accord de phase est obtenu pour une direction du milieu non linéaire $MNL_2$ et ce pour des fréquences déterminées $\omega_s$ et $\omega_i$ comme l'illustre la figure 2. Lorsque l'on désire modifier le couple de fréquence ($\omega_s$ et $\omega_i$), il suffit de modifier l'orientation dudit milieu non linéaire. La figure 2 fournit plusieurs courbes d'accord de phase pour un cristal de $AgGaSe_2$ comme milieu $MNL_2$. Les longueurs d'onde de pompe de l'oscillateur paramétrique optique sont issues du doublement de fréquence obtenu à partir d'un laser $CO_2$ émettant respectivement à 9,6 μm, 9,8 μm et 10,6 μm. Il apparaît sur ces courbes, que les plages de rotation du cristal nécessaires pour couvrir par exemple la totalité de la bande 8-12 μm varient fortement avec la longueur d'onde de pompe.

Notamment :

- 11 degrés d'excursion pour une onde optique de pompe de l'OPO de longueur d'onde $\lambda/2 = 5,3$ μm,
- 2,5 degrés d'excursion pour une onde optique de pompe de l'OPO de longueur d'onde $\lambda/2 = 4,8$ μm.

Pour cette dernière longueur d'onde, on constate de plus que les longueurs d'onde 8 μm et 12 μm sont atteintes simultanément pour le même angle d'accord de phase et qu'elle permet de minimiser la plage de rotation du cristal.

Notons cependant que la longueur d'onde de 5,3 μm permet d'atteindre la longueur d'onde de 16 μm, très intéressante pour des applications telles que la séparation isotopique.

Avantageusement, la source laser accordable peut utiliser deux milieux non linéaire $MNL_1$ et $MNL_2$ en $AgGaSe_2$ qui présente une meilleure tenue au flux et une meilleure transparence s'ils sont pompés à 5 μm plutôt qu'à 2 μm (pompage classique d'OPO selon l'art antérieur) ce qui est le cas de l'invention qui utilise préférentiellement le doublement de fréquence d'un laser $CO_2$.

Par ailleurs, le doublement de fréquence utilisé, qui alimente l'OPO, assure une fonction de sélection de longueurs d'onde de pompe. Seule la fréquence $2\omega$ pour laquelle la condition d'accord de phase est satisfaite peut émerger. De plus, le doublement de fréquence permet d'éviter la traînée de l'impulsion d'un laser $CO_2$. Il n'y a ainsi pas de risque de dommage optique du cristal lié à l'énergie que contient cette traînée d'impulsion.

On peut aussi envisager d'inclure un élément dispersif en sortie du laser $CO_2$, afin d'affiner la raie d'émission de ce laser. Typiquement, on peut utiliser un prisme en ZnSe par exemple.

**Revendications**

1. Source laser accordable comprenant une cavité résonante comportant un matériau ayant un fort coefficient non linéaire d'ordre 2, et des moyens pour illuminer la cavité résonante par une onde de pompe, de manière à générer une onde signal à une fréquence $\omega_s$ et une onde oisive à une fréquence $\omega_i$, caractérisée en ce que les moyens pour illuminer la cavité résonante comprennent une source optique émettant une onde optique à une fréquence $\omega$, un doubleur de fréquence alimenté par l'onde à la fréquence $\omega$ et générant une onde optique à une fréquence $2\omega$ correspondant à l'onde de pompe, la fréquence $\omega$ étant sensiblement égale à l'une au moins des fréquences $\omega_s$ et $\omega_i$.

2. Source laser accordable selon la revendication 1, caractérisé en ce que la source optique émettant une onde optique à une fréquence $\omega$ est un laser $CO_2$.

3. Source laser accordable selon l'une des revendications 1 ou 2, caractérisé en ce que le doubleur de fréquence comprend un matériau à fort coefficient non linéaire d'ordre 2, de type $AgGaSe_2$ ou $ZnGeP_2$ ou CdSe ou GaSe.

4. Source laser accordable selon l'une des revendications 1 ou 2, caractérisée en ce que le doubleur de fréquence comprend un matériau à quasi-accord de phase de type GaAs.

5. Source laser accordable optique selon l'une des revendications 1 à 4, caractérisé en ce que la cavité résonante et le doubleur de fréquence comportent le même matériau ayant un fort coefficient non linéaire d'ordre 2.

FIG.1

FIG.2

# EP 0 864 915 A1

**Office européen des brevets**

**RAPPORT DE RECHERCHE EUROPEENNE**

Numéro de la demande

EP 98 40 0476

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | HALI G J ET AL: "LIB305 OPTICAL PARAMETRIC OSCILLATOR PUMPED BY A Q-SWITCHED FREQUENCY-DOUBLED ALL-SOLID-STATE LASER" OPTICS LETTERS, vol. 18, no. 18, 15 septembre 1993, pages 1511-1513, XP000396926 * abrégé; figure 1 * | 1 | G02F1/39 |
| A | BYER R L ET AL: "CdGeAs/sub 2/-a new nonlinear crystal phasematchable at 10.6 mu" APPLIED PHYSICS LETTERS, 1 OCT. 1971, USA, vol. 19, no. 7, ISSN 0003-6951, pages 237-240, XP002047583 * abrégé; figures 2,3 * | 1-5 | |
| A | BADIKOV V V ET AL: "Growth and optical properties of nonlinear silver selenogallate single crystals" SOVIET JOURNAL OF QUANTUM ELECTRONICS., vol. 22, no. 8, août 1992, US, pages 722-724, XP002066512 * abrégé * | 1-3 | DOMAINES TECHNIQUES RECHERCHES (Int.Cl.6) G02F |
| A | BOYD G D ET AL: "Linear and nonlinear optical properties of some ternary selenides" IEEE JOURNAL OF QUANTUM ELECTRONICS, DEC. 1972, USA, vol. QE-8, no. 12, ISSN 0018-9197, pages 900-908, XP002047584 * tableau VIII * | 1,3 | |
| A | WO 96 24884 A (THOMSON CSF ;DELACOURT DOMINIQUE (FR); LALLIER ERIC (FR); PAPUCHON) 15 août 1996 * page 5, ligne 4 - ligne 6 * | 1,4 | |

Le présent rapport a été établi pour toutes les revendications

| Lieu de la recherche | Date d'achèvement de la recherche | Examinateur |
|---|---|---|
| LA HAYE | 29 mai 1998 | Galanti, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant